# EUROPEAN PATENT SPECIFICATION

(11) **EP 3 869 724 B1**
(45) Date of publication and mention of the grant of the patent: **26.08.2026**
(21) Application number: 20216597.3
(22) Date of filing: 22.12.2020
(51) Int. Cl.: H04L 5/00

(54) **EHT STATION WITH SEGMENT PARSER FOR ENCODING AN EHT PPDU WITH A LARGE MULTIPLE RESOURCE UNIT (MRU)**
EHT-STATION MIT SEGMENTPARSER ZUR CODIERUNG EINER EHT-PPDU MIT EINER GROSSEN MEHRFACHRESSOURCENEINHEIT (MRU)
STATION EHT COMPORTANT UN ANALYSEUR DE SEGMENT POUR CODER UNE PPDU EHT AVEC UNE GRANDE UNITÉ DE RESSOURCES MULTIPLES (MRU)

(30) Priority: 20.02.2020 US 202062978973 P
(43) Date of publication of application: 25.08.2021
(73) Proprietor: Intel Corporation, Santa Clara, CA 95054 (US)
(72) Inventor: CHEN, Xiaogang, Portland, OR 97229 (US); LI, Qinghua, San Ramon, CA 94582 (US); JIANG, Feng, Sunnyvale, CA 94086 (US); KENNEY, Thomas J., Portland, OR 97229 (US)
(74) Representative: Viering, Jentschura & Partner mbB Patent- und Rechtsanwälte

(56) References cited:
- US-A1- 2012 263 156
- US-A1- 2016 212 246
- US-A1- 2019 281 614

## Description

### TECHNICAL FIELD

Embodiments pertain to wireless communications. Some embodiments relate to wireless local area networks (WLANs). Some embodiments relate to WLAN communications in accordance with the IEEE 802.11be draft standard (i.e., Extremely High Throughput (EHT)). Some embodiments relate to segment parsers. Some embodiments relate to stream parsers.

### BACKGROUND

One issue with EHT is that PPDUs may include a multiple resource unit (MRU) comprising several resource units (RUs) and having frequency segments which may be different sizes. What is needed is a technique to distribute encoded bits to the various frequency segments of an MRU.

US 2012/0263156 A1 describes a technique for generating 40+40 MHz and 40+40+40+40 MHz transmission modes for IEEE 802.11 wireless communications systems using Very High Throughput (VHT) waveforms with application to Television White Space (TVWS) spectrum.

US 2019/281614 A1 defines an apparatus for communicating via sub-bands in a wireless communication network. The apparatus has a segment parser that is configured to segment the total channel bandwidth into multiple segments of equal or unequal sub-band bandwidths or number of data tones.

### SUMMARY

The invention is an apparatus and computer-readable storage medium as defined in the appended claims.

### BRIEF DESCRIPTION OF THE DRAWINGS

FIG. 1 illustrates the operation of a segment parser in accordance with some embodiments;

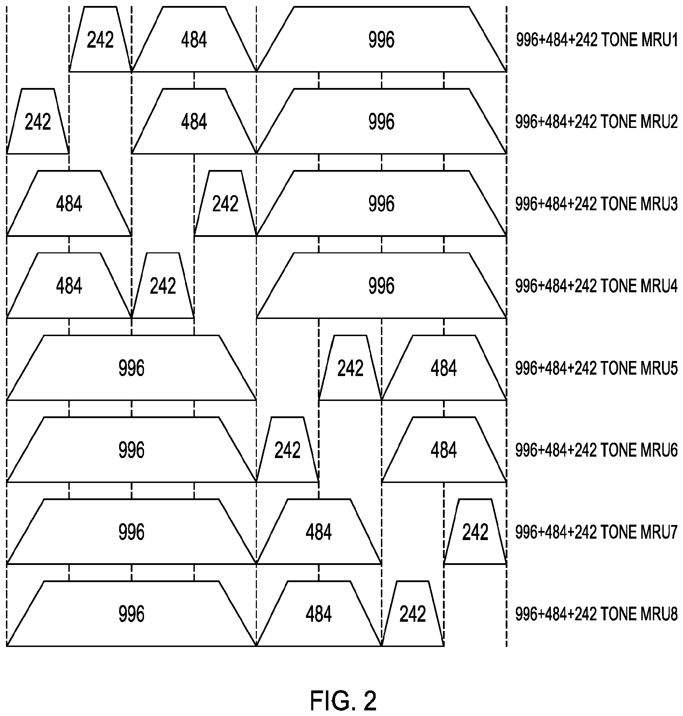

FIG. 2 illustrates MRUs having 996, 484 and 242 tone RUs in a 160 MHz EHT PPDU in accordance with some embodiments; and

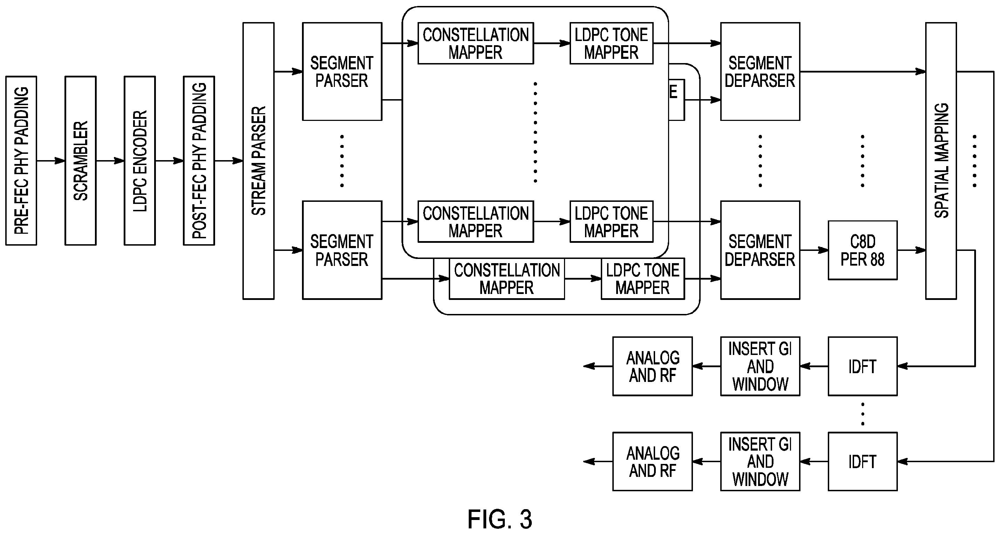

FIG. 3 illustrates a transmitter block diagram for encoding and transmitting an EHT PPDU in accordance with embodiments
FIG. 4 illustrates a functional block diagram of a station (STA) in accordance with some embodiments.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments.

Some embodiments are directed to an apparatus of an extremely high-throughput (EHT) station (STA) configured for operation in a wireless local area network (WLAN). In these embodiments, the EHT STA comprises processing circuitry and memory. In accordance with some embodiments, for an EHT physical layer conformance procedure (PLCP) protocol data unit (PPDU) with a multiple resource unit (MRU) that is greater than 80 MHz, the processing circuitry configures a segment parser to encode a data field of the EHT PPDU. The segment parser generates a bit distribution sequence in accordance with a proportional round robin segmenting process by assigning consecutive groups of s bits to different frequency segments of the MRU in a round robin fashion. The number of bits in a group is based on a size of the frequency segment for the group. The EHT STA encodes the EHT PPDU for transmission, the data field being transmitted on tones of the different frequency segments. The EHT STA may be either an AP STA or non-AP STA.

In some embodiments, for an EHT PPDU with a multiple resource unit (MRU) that is not greater than 80 MHz, the processing circuitry to encode the EHT PPDU for transmission without use of the segment parser.

The EHT PPDU is either a 160 MHz bandwidth EHT PPDU or a 320 MHz bandwidth EHT PPDU, and the MRU comprises two or more resource units (RUs), each RU comprising a plurality of tones (i.e., subcarriers). In these embodiments, each RU is one of a 242 tone RU, a 484 tone RU and a 996 tone RU and the tones of one or more of the RUs of the MRU are within one of the different frequency segments. For example, two RUs (the 242 tone RU and the 484 tone RU) may be within one 80 MHz frequency segment and a single 996 tone RU may be with another 80 MHz frequency segment.

For an MRU comprising three RUs including a 242 tone RU, a 484 tone RU and a 996 tone RU, the 242 tone RU and the 484 tone RU are transmitted in a first of the frequency segments, and the 996 tone RU is transmitted in a second of the frequency segments.

To perform the proportional round-robin segmenting on each block of bits, the processing circuitry is to configure the segment parser to use a proportional ratio (*mₗ*) for each of the frequency segments of the MRU to allocate the bits to each of the frequency segments. In these embodiments, the proportional ratio (***mₗ***) is an integer times the number of bits (***s***) in a group, and the number of bits (***s***) in a group is based on a number of encoded bits per subcarrier (Nbpscs) in accordance with the following equation:
$s = max \left(1, \frac{{N}_{bpscs , l , μ}}{2}\right)$ where 1 is an index of the frequency segment and **µ** is a spatial stream index. In these embodiments, consecutive groups of s bits are assigned to different frequency segments of the MRU in a round robin fashion.

In some embodiments, the processing circuitry is to configure the segment parser to allocate bits (***m***) to each of the frequency segments in accordance with the following equation: $m = \left({\sum }_{l = 0}^{L - 1} {m}_{l}\right) ⋅ \left⌊\frac{k}{{m}_{l}}\right⌋ + {\sum }_{i = 0}^{L - 1} {m}_{i} + \left(k mod {m}_{l}\right)$ where ***mₗ*** is the proportional ratio, ***k*** is a bit index in a frequency segment, ***l*** is the index of the frequency segment, and ***L*** is the number of frequency segments.

In some embodiments, the processing circuitry is to configure the segment parser to allocate bits (***m***) to each of the frequency segments in accordance with the following equation: $m = \left⌊\frac{{k}_{i}}{{s}_{i} ⋅ {r}_{i}}\right⌋ ⋅ u + {q}_{i} + mod \left({k}_{i},{s}_{i}⋅{r}_{i}\right)$ where $u = {\sum }_{n = 0}^{L - 1} {r}_{n} ⋅ {s}_{n}$ ${q}_{i} = \left\{\begin{matrix}0 , if i = 0 \\ {\sum }_{j = 0}^{i - 1} {r}_{j} ⋅ {s}_{j} , if i = 1 , 2 , … , L - 1\end{matrix}\right.$ ${k}_{i} = {N}_{CBPSS} ∗ \frac{{r}_{i}}{{\sum }_{k = 0}^{L - 1} {r}_{k}}$ where ***r*** is the proportional ratio, ***k*** is a bit index in a frequency segment, and s is number of bits (***s***) in a group.

In some embodiments, to encode the data field of the EHT PPDU, the processing circuitry is to configure the segment parser to generate the bit distribution sequence from encoded bits received from a stream parser by first dividing the encoded bits into blocks of encoded bits based on a number of coded bits per spatial stream (*NCBPSS*) and a number of frequency segments (*L*) of the MRU in accordance with ${\sum }_{l = 0}^{L - 1} {N}_{cbpss , l , u}$

These embodiments are discussed in more detail below.

Embodiments disclosed herein proposes an equation and scheme to do segment parser and stream parser. The equation and scheme are agnostic to the number of segments/streams, modulation or and segment size. The scheme/equation are applicable to different MCS in different spatial streams and are also applicable to different MCS in different RU.

EHT has more than two 80MHz segments and each of which may have different segment size. Segment parser is currently under discussion, but no parser has been proposed. In addition, per stream MCS was proposed by Intel product, but a stream parser is also not available.

Embodiments of a segment parser are described below.
Given the parameters below:
The total number of frequency segments, denoted by *L;*
The number of bits assigned to a single axis (real or imaginary) in a constellation point in a spatial stream in a frequency segment, denoted by: ${s}_{i} = max \left(1, \frac{{N}_{BPSCS}}{2}\right)$, *i* = 0,1, *L* - 1.
The round robin factor for each segment *rᵢ, i* = 0,1, *L -* 1.
The bit index in each frequency segment *kᵢ, i* = 0,1, *L -* 1.
Then we have the following equation that distribute the bit sequence in each spatial stream (*xₘ*) to multiple frequency segments (*y_{kᵢ}*) in a round robin fashion. ${y}_{{k}_{i}} = {x}_{m} .$ $m = \left⌊\frac{{k}_{i}}{{s}_{i} ⋅ {r}_{i}}\right⌋ ⋅ u + {q}_{i} + mod \left({k}_{i},{s}_{i}⋅{r}_{i}\right) .$ Where $u = {\sum }_{n = 0}^{L - 1} {r}_{n} ⋅ {s}_{n}$ ${q}_{i} = \left\{\begin{matrix}0 , if i = 0 \\ {\sum }_{j = 0}^{i - 1} {r}_{j} ⋅ {s}_{j} , if i = 1 , 2 , … L - 1\end{matrix}\right.$ ${k}_{i} = {N}_{CBPSS} ∗ \frac{{r}_{i}}{{\sum }_{k = 0}^{L - 1} {r}_{k}}$
Note that *N_{CBPSS}* is the total number of coded bits in one spatial stream, and *N_{BPSCS}* is the number of bits in one constellation.
If each frequency segment has the same MCS, namely *sᵢ* is the same for different frequency segments then the abovementioned equations can be simplified as ${y}_{{k}_{i}} = {x}_{m} .$ $m = \left⌊\frac{{k}_{i}}{s ⋅ {r}_{i}}\right⌋ ⋅ u + {q}_{i} + mod \left({k}_{i},s⋅{r}_{i}\right) .$ Where $u = s ⋅ {\sum }_{n = 0}^{L - 1} {r}_{n}$ ${q}_{i} = \left\{\begin{matrix}0 , if i = 0 \\ s ⋅ {\sum }_{j = 0}^{i - 1} {r}_{j} , if i = 1 , 2 , … L - 1\end{matrix}\right.$ ${k}_{i} = {N}_{SD} ∗ \frac{{r}_{i}}{{\sum }_{k = 0}^{L - 1} {r}_{k}}$

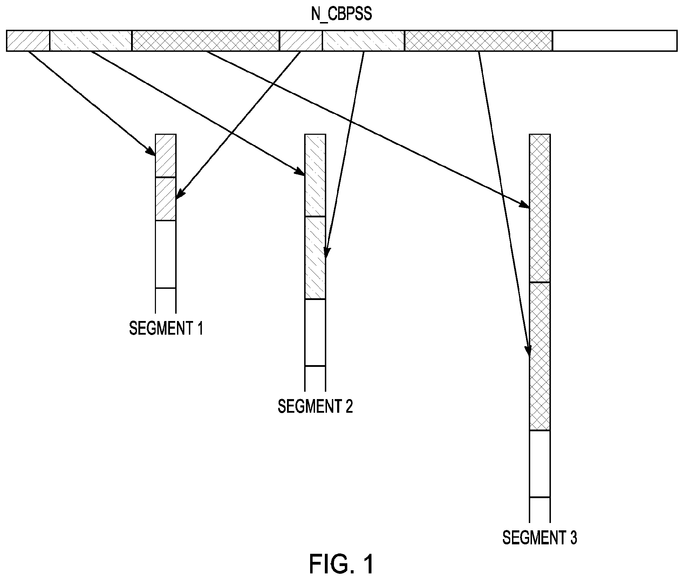

For example, if there are three segments in one RUs (segment 1 has 242 tone; segment 2 has 484 tone, and segment 3 has 996 tone) and data is 16QAM modulated, then L = 2, s = 2. If r1 = 1, r2 = 2 and r3 = 4, then Table 1 (shown below) is the first 10 bits mapping for each segment. FIG. 1 shows the mapping in graphic.

**TABLE 1**

| *y*_{*k*₁} | *y*_{*k*₂} | *y*_{*k*₃} |
|---|---|---|
| 0 | 2 | 6 |
| 1 | 3 | 7 |
| 14 | 4 | 8 |
| 15 | 5 | 9 |
| 28 | 16 | 10 |
| 29 | 17 | 11 |
| 42 | 18 | 12 |
| 43 | 19 | 13 |
| 56 | 30 | 20 |
| 57 | 31 | 21 |

Embodiments of a stream parser are described below. The stream parser can be derived similar with the segment parser. Given the parameters below:
1. The total number of spatial segments, denoted by *L*;
2. The number of bits assigned to a single axis (real or imaginary) in a constellation point in a spatial stream, denoted by ${s}_{i} = max \left(1, \frac{{N}_{BPSCS}}{2}\right)$, *i* = 0,1, *L* - 1.
3. The round robin factor for each spatial stream now equal to *sᵢ, i =* 0,1, *L* - 1.
4. The bit index in each spatial stream *kᵢ, i* = 0,1, *L -* 1.
Then we have the following equation that distribute the bit sequence of the output of the encoder (*xₘ*) to multiple spatial streams (*y_{kᵢ}*) in a round robin fashion. ${y}_{{k}_{i}} = {x}_{m} .$ $m = \left⌊\frac{{k}_{i}}{{s}_{i}}\right⌋ ⋅ S + {q}_{i} + mod \left({k}_{i}, {s}_{i}\right) .$ Where $S = {\sum }_{n = 0}^{L - 1} {s}_{n}$ ${q}_{i} = \left\{\begin{matrix}0 , if i = 0 \\ {\sum }_{j = 0}^{i - 1} {s}_{j} , if i = 1 , 2 , … L - 1\end{matrix}\right.$ ${k}_{i} = {N}_{CBPS} ∗ \frac{{s}_{i}}{{\sum }_{k = 0}^{L - 1} {s}_{k}}$

If each spatial stream has the same MCS, namely *sᵢ* are the same for different spatial streams, then Eq. 3 group becomes the ones defined in the spec in IEEE 802.11ax (shown below). The following equations are an equivalent description to the above procedure. Bit *i* at the output of the encoder is assigned to input bit *k* of spatial stream *i_{SS}* where $i = \left({i}_{SS}-1\right) s + S ⋅ \left⌊\frac{k}{s}\right⌋ + k mod s$ ${i}_{SS} = 1 , 2 , … , {N}_{SS}$ $i = 0 , 1 , … , {N}_{CBPS} - 1$ $k = 0 , 1 , … , {N}_{CBPSS} - 1$

In some embodiments, a physical layer protocol data unit may be a physical layer conformance procedure (PLCP) protocol data unit (PPDU). In some embodiments, the AP and STAs may communicate in accordance with one of the IEEE 802.11 standards. IEEE draft specification IEEE P802.11ax/D4.0.

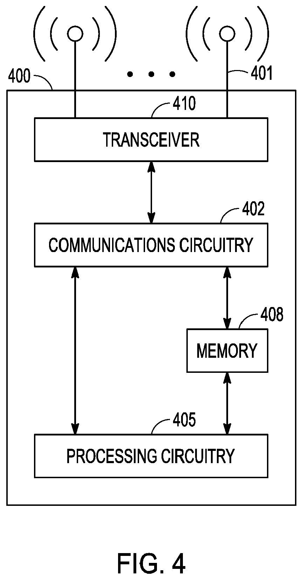

In one embodiment, FIG. 4 illustrates a functional block diagram of a communication station that may be suitable for use as an EHT AP (an AP STA) or EHT STA (a non-AP STA) in accordance with some embodiments. The communication station 400 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 400 may include communications circuitry 402 and a transceiver 410 for transmitting and receiving signals to and from other communication stations using one or more antennas 401. The communications circuitry 402 may include circuitry that can operate the physical layer (PHY) communications and/or medium access control (MAC) communications for controlling access to the wireless medium, and/or any other communications layers for transmitting and receiving signals. The communication station 400 may also include processing circuitry 406 and memory 408 arranged to perform the operations described herein. In some embodiments, the communications circuitry 402 and the processing circuitry 406 may be configured to perform operations detailed in the above figures, diagrams, and flows.

In accordance with some embodiments, the communications circuitry 402 may be arranged to contend for a wireless medium and configure frames or packets for communicating over the wireless medium. The communications circuitry 402 may be arranged to transmit and receive signals. The communications circuitry 402 may also include circuitry for modulation/demodulation, upconversion/downconversion, filtering, amplification, etc. In some embodiments, the processing circuitry 406 of the communication station 400 may include one or more processors. In other embodiments, two or more antennas 401 may be coupled to the communications circuitry 402 arranged for sending and receiving signals. The memory 408 may store information for configuring the processing circuitry 406 to perform operations for configuring and transmitting message frames and performing the various operations described herein. The memory 408 may include any type of memory, including non-transitory memory, for storing information in a form readable by a machine (e.g., a computer). For example, the memory 408 may include a computer-readable storage device, read-only memory (ROM), random-access memory (RAM), magnetic disk storage media, optical storage media, flash-memory devices and other storage devices and media.

In some embodiments, the communication station 400 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 400 may include one or more antennas 401. The antennas 401 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 400 may include one or more of a keyboard, a display, a non-volatile memory port, multiple antennas, a graphics processor, an application processor, speakers, and other mobile device elements. The display may be an LCD screen including a touch screen.

Although the communication station 400 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements of the communication station 400 may refer to one or more processes operating on one or more processing elements.

## Claims

1. An apparatus of a station, STA, (400) configured for operation in a wireless local area network, WLAN, the STA comprising: processing circuitry (406); and memory (408),
wherein, for a physical layer conformance procedure, PLCP, protocol data unit, PPDU, with a multiple resource unit, MRU, that is greater than 80 MHz, the processing circuitry (406) is arranged to:
configure a segment parser to encode a data field of the PPDU, the segment parser configured to generate a bit distribution sequence in accordance with a round robin segmenting process by assigning consecutive groups of bits to different frequency segments of the MRU in a round robin fashion, wherein each group has a number of bits s, the number of bits s being based on a size of the frequency segment for the group; and
encode the PPDU for transmission, the data field being transmitted on tones of the different frequency segments,
wherein the STA is an Extremely High-Throughput, EHT, STA and the PPDU is an EHT PPDU that is either a 160 MHz bandwidth EHT PPDU or a 320 MHz bandwidth EHT PPDU,
wherein the MRU comprises three resource units, RUs, comprising a 242 tone RU, a 484 tone RU, and a 996 tone RU;
wherein the 242 tone RU and the 484 tone RU are transmitted in a first frequency of the frequency segments; and
wherein the 996 tone RU is transmitted in a second of the frequency segments;
wherein to perform the proportional round-robin segmenting on each block of bits, the processing circuitry is to configure the segment parser to:
use a proportional ratio, ***mₗ,*** for each of the frequency segments of the MRU to allocate the bits to each of the frequency segments,
wherein the proportional ratio ***mₗ*** is an integer times the number of bits, s, in a group, and
wherein the number of bits s in a group is based on a number of encoded bits per subcarrier, Nbpscs, in accordance with the following equation:
$s = max \left(1, \frac{Nbpscs , l , μ}{2}\right)$ where ***l*** is an index of the frequency segment and **µ** is a spatial stream index.

2. The apparatus of claim 1, wherein, for an EHT PPDU with an MRU that is not greater than 80 MHz, the processing circuitry (406) is arranged to encode the EHT PPDU for transmission without use of the segment parser.

3. The apparatus of claim 1 or claim 2, wherein the tones of the MRU are provided within 80 MHz frequency segments.

4. The apparatus of claim 3, wherein the processing circuitry is to configure the segment parser to allocate bits, ***m**,* to each of the frequency segments in accordance with the following equation: $\left(m=\left({\sum }_{l = 0}^{L - 1} {m}_{l}\right).\left[\frac{k}{{m}_{l}}\right]+{\sum }_{i = 0}^{L - 1} {m}_{i} + \left(k mod {m}_{l}\right)\right.$ wherein ***mₗ*** is the proportional ratio, ***k*** is a bit index in a frequency segment, ***l*** is the index of the frequency segment, and ***L*** is the number of frequency segments.

5. The apparatus of any one of claims 1 to 4, wherein to encode the data field of the EHT PPDU, the processing circuitry is to configure the segment parser to generate the bit distribution sequence from encoded bits received from a stream parser by dividing the encoded bits into blocks of encoded bits based on a number of coded bits per spatial stream, N_{CBPSS}, and a number, ***L*,** of frequency segments of the MRU.

6. The apparatus of claim 1, wherein the processing circuitry (406) comprises a baseband processor configured to be coupled to two or more antennas (401).

7. The apparatus of claim 6 wherein the memory (408) is configured to store the EHT PPDU.

8. A computer-readable storage medium that stores instructions for execution by processing circuitry of a station, STA, configured for operation in a wireless local area network, WLAN,
wherein, for a physical layer conformance procedure, PLCP, protocol data unit, PPDU, with a multiple resource unit, MRU, that is greater than 80 MHz, the instructions, when executed, cause the processing circuitry to:
configure a segment parser to encode a data field of the PPDU, the segment parser generating a bit distribution sequence in accordance with a proportional round robin segmenting process by assigning consecutive groups of bits to different frequency segments of the MRU in a round robin fashion, wherein each group has a number of bits s, the number of bits s being based on a size of the frequency segment for the group; and
encode the PPDU for transmission, the data field being transmitted on tones of the different frequency segments,
wherein the STA is an EHT STA, and the PPDU is an EHT PPDU that is either a 160 MHz bandwidth EHT PPDU or a 320 MHz bandwidth EHT PPDU,
wherein the MRU comprises three resource units, RUs, comprising a 242 tone RU, a 484 tone RU, and a 996 tone RU;
wherein the 242 tone RU and the 484 tone RU are transmitted in a first frequency of the frequency segments; and
wherein the 996 tone RU is transmitted in a second of the frequency segments,
wherein to perform the proportional round-robin segmenting on each block of bits, the instructions cause the processing circuitry to configure the segment parser to:
use a proportional ratio, ***mₗ**,* for each of the frequency segments of the MRU to allocate the bits to each of the frequency segments,
wherein the proportional ratio ***mₗ*** is an integer times the number of bits, s, in a group, and
wherein the number of bits s in a group is based on a number of encoded bits per subcarrier, Nbpscs, in accordance with the following equation: $s = max \left(1, \frac{Nbpscs , l , μ}{2}\right)$ where ***l*** is an index of the frequency segment and **µ** is a spatial stream index.

9. The computer-readable storage medium of claim 8, wherein, for an EHT PPDU with
an MRU that is not greater than 80 MHz, the instructions cause the processing circuitry to encode the EHT
PPDU for transmission without use of the segment parser.

10. The computer-readable storage medium of claim 8 or 9, wherein the tones of the MRU are provided within 80 MHz frequency segments.

11. The computer-readable storage medium of any one of claims 8 to 10, wherein the instructions cause the
processing circuitry to configure the segment parser to allocate bits, ***m**,* to each of the frequency segments in accordance with the following equation: $\left(m=\left({\sum }_{l = 0}^{L - 1} {m}_{l}\right)⋅\left[\frac{k}{{m}_{l}}\right]+{\sum }_{i = 0}^{L - 1} {m}_{i} + \left(k mod {m}_{l}\right)\right.$ wherein ***mₗ*** is the proportional ratio, ***k*** is a bit index in a frequency segment, ***l*** is the index of the frequency segment, and ***L*** is the number of frequency segments.

## Patentansprüche

1. Vorrichtung einer Station, STA, (400), die konfiguriert ist für einen Betrieb in einem drahtlosen lokalen Netzwerk, WLAN, wobei die STA umfasst: eine Verarbeitungsschaltung (406); und einen Speicher (408), wobei die Verarbeitungsschaltung (406) für eine Protokolldateneinheit, PPDU, eines Konformitätsprozesses einer Bitübertragungsschicht, PLCP, mit einer Multiressourceneinheit, MRU, die größer als 80 MHz ist, geeignet ist zum:
Konfigurieren eines Segmentparsers zum Codieren eines Datenfelds der PPDU, wobei der Segmentparser konfiguriert ist zum Erzeugen einer Bitverteilungssequenz gemäß einem Rundlauf-Segmentierungsprozess, indem verschiedenen Frequenzsegmenten der MRU aufeinanderfolgende Gruppen von Bits in einer Rundlaufweise zugewiesen werden, wobei jede Gruppe eine Anzahl von Bits s aufweist, wobei die Anzahl von Bits s auf einer Größe des Frequenzsegments für die Gruppe beruht; und
Codieren der PPDU für eine Übertragung, wobei das Datenfeld auf Tones der verschiedenen Frequenzsegmente übertragen wird,
wobei die STA eine STA mit extrem hohem Durchsatz, EHT-STA, ist und die PPDU eine EHT-PPDU ist, die entweder eine EHT-PPDU mit 160 MHz Bandbreite oder eine EHT-PPDU mit 320 MHz Bandbreite ist,
wobei die MRU drei Ressourceneinheiten, RUs, umfasst, die eine 242-Tone-RU, eine 484-Tone-RU und eine 996-Tone-RU umfassen;
wobei die 242-Tone-RU und die 484-Tone-RU mit einer ersten Frequenz der Frequenzsegmente übertragen werden; und
wobei die 996-Tone-RU in einem zweiten der Frequenzsegmente übertragen wird;
wobei zum Durchführen des proportionalen Rundlauf-Segmentierens an jedem Block von Bits die Verarbeitungsschaltung geeignet ist, den Segmentparser zu konfigurieren zum:
Verwenden eines Proportionalverhältnisses, mₗ, für jedes der Frequenzsegmente der MRU, um die Bits jedem der Frequenzsegmente zuzuweisen,
wobei das Proportionalverhältnis mₗ eine ganze Zahl mal der Anzahl von Bits, s, in einer Gruppe ist, und
wobei die Anzahl von Bits s in einer Gruppe auf einer Anzahl von codierten Bits pro Teilträger, Nbpscs, gemäß der folgenden Gleichung beruht: $s = max \left(1, \frac{Nbpscs , l , μ}{2}\right)$, wobei 1 ein Index des Frequenzsegments und µ ein Index eines räumlichen Datenstroms ist.

2. Vorrichtung nach Anspruch 1, wobei für eine EHT-PPDU mit einer MRU, die nicht größer als 80 MHz ist, die Verarbeitungsschaltung (406) geeignet ist, um die EHT-PPDU für eine Übertragung ohne Verwendung des Segmentparsers zu codieren.

3. Vorrichtung nach Anspruch 1 oder Anspruch 2, wobei die Tones der MRU innerhalb von 80 MHz-Frequenzsegmenten bereitgestellt werden.

4. Vorrichtung nach Anspruch 3, wobei die Verarbeitungsschaltung geeignet ist, den Segmentparser zu konfigurieren, um jedem der Frequenzsegmente die Bits, m, gemäß der folgenden Gleichung zuzuweisen: $\left(m=\left({\sum }_{l = 0}^{L - 1} {m}_{l}\right). \left[\frac{k}{{m}_{l}}\right]+{\sum }_{l = 0}^{L - 1} {m}_{i} + \left(k mod {m}_{l}\right)\right.$ wobei mₗ das Proportionalverhältnis ist, kein Bitindex in einem Frequenzsegment ist, l der Index des Frequenzsegments ist und L die Anzahl von Frequenzsegmenten ist.

5. Vorrichtung nach einem der Ansprüche 1 bis 4, wobei die Verarbeitungsschaltung zum Codieren des Datenfelds der EHT-PPDU geeignet ist, den Segmentparser zu konfigurieren zum Erzeugen der Bitverteilungssequenz aus den codierten Bits, die von einem Datenstromparser empfangen werden, indem die codierten Bits in Blöcke von codierten Bits basierend auf einer Anzahl von codierten Bits pro räumlichem Datenstrom, N_{CBPSS}, und einer Anzahl L von Frequenzsegmenten der MRU unterteilt werden.

6. Vorrichtung nach Anspruch 1, wobei die Verarbeitungsschaltung (406) einen Basisbandprozessor umfasst, der konfiguriert ist, um mit zwei oder mehr Antennen (401) gekoppelt zu werden.

7. Vorrichtung nach Anspruch 6, wobei der Speicher (408) konfiguriert ist, um die EHT-PPDU zu speichern.

8. Computerlesbares Speichermedium, in dem Anweisungen für eine Ausführung durch eine Verarbeitungsschaltung einer Station, STA, gespeichert sind, die konfiguriert ist für einen Betrieb in einem drahtlosen lokalen Netzwerk, WLAN,
wobei die Anweisungen, wenn sie, für eine Protokolldateneinheit, PPDU, eines Konformitätsprozesses einer Bitübertragungsschicht, PLCP, mit einer Multiressourceneinheit, MRU, die größer als 80 MHz ist, ausgeführt werden, die Verarbeitungsschaltung veranlassen zum:
Konfigurieren eines Segmentparsers zum Codieren eines Datenfelds der PPDU, wobei der Segmentparser eine Bitverteilungssequenz gemäß einem proportionalen Rundlauf-Segmentierungsprozess erzeugt, indem verschiedenen Frequenzsegmenten der MRU aufeinanderfolgende Gruppen von Bits in einer Rundlaufweise zugewiesen werden, wobei jede Gruppe eine Anzahl von Bits s aufweist, wobei die Anzahl von Bits s auf einer Größe des Frequenzsegments für die Gruppe beruht; und
Codieren der PPDU für eine Übertragung, wobei das Datenfeld auf Tones der verschiedenen Frequenzsegmente übertragen wird,
wobei die STA eine EHT-STA ist und die PPDU eine EHT-PPDU ist, die entweder eine EHT-PPDU mit 160 MHz Bandbreite oder eine EHT-PPDU mit 320 MHz Bandbreite ist,
wobei die MRU drei Ressourceneinheiten, RUs, umfasst, die eine 242-Tone-RU, eine 484-Tone-RU und eine 996-Tone-RU umfassen;
wobei die 242-Tone-RU und die 484-Tone-RU mit einer ersten Frequenz der Frequenzsegmente übertragen werden; und
wobei die 996-Tone-RU in einem zweiten der Frequenzsegmente übertragen wird,
wobei die Anweisungen zum Durchführen des proportionalen Rundlauf-Segmentierens an jedem Block von Bits die Verarbeitungsschaltung veranlassen, den Segmentparser zu konfigurieren zum:
Verwenden eines Proportionalverhältnisses, mₗ, für jedes der Frequenzsegmente der MRU, um die Bits jedem der Frequenzsegmente zuzuweisen,
wobei das Proportionalverhältnis mₗ eine ganze Zahl mal der Anzahl von Bits, s, in einer Gruppe ist, und
wobei die Anzahl von Bits s in einer Gruppe auf einer Anzahl von codierten Bits pro Teilträger, Nbpscs, gemäß der folgenden Gleichung beruht: $s = max \left(1, \frac{Nbpscs , l , μ}{2}\right)$, wobei 1 ein Index des Frequenzsegments und µ ein Index eines räumlichen Datenstroms ist.

9. Computerlesbares Speichermedium nach Anspruch 8, wobei für eine EHT-PPDU mit einer MRU, die nicht größer als 80 MHz ist, die Anweisungen die Verarbeitungsschaltung veranlassen, die EHT-PPDU für eine Übertragung ohne Verwendung des Segmentparsers zu codieren.

10. Computerlesbares Speichermedium nach Anspruch 8 oder 9, wobei die Tones der MRU innerhalb von 80 MHz-Frequenzsegmenten bereitgestellt werden.

11. Computerlesbares Speichermedium nach einem der Ansprüche 8 bis 10, wobei die Anweisungen die Verarbeitungsschaltung veranlassen, den Segmentparser zu konfigurieren, um jedem der Frequenzsegmente die Bits, m, gemäß der folgenden Gleichung zuzuweisen: $\left(m=\left({\sum }_{l = 0}^{L - 1} {m}_{l}\right). \left[\frac{k}{{m}_{l}}\right]+{\sum }_{l = 0}^{L - 1} {m}_{i} + \left(k mod {m}_{l}\right)\right.$ wobei mₗ das Proportionalverhältnis ist, k ein Bitindex in einem Frequenzsegment ist, l der Index des Frequenzsegments ist und L die Anzahl von Frequenzsegmenten ist.

## Revendications

1. Appareil d'une station, STA, (400) configurée pour fonctionner dans un réseau local sans fil, WLAN, la STA comprenant : une circuiterie (406) de traitement ; et une mémoire (408),
pour une unité de données de protocole de procédure de conformité de couche physique, PLCP, PPDU, avec une unité de ressources multiples, MRU, qui est supérieure à 80 MHz, la circuiterie de traitement (406) étant conçue pour:
configurer un analyseur de segments pour coder un champ de données de la PPDU, l'analyseur de segments étant configuré pour générer une séquence de distribution de bits conformément à un processus de segmentation par round robin en affectant des groupes consécutifs de bits à différents segments de fréquence de la MRU de façon en round robin, chaque groupe ayant un nombre de bits s, le nombre de bits s étant basé sur une taille du segment de fréquence pour le groupe ; et
encoder la PPDU pour transmission, le champ de données étant transmis sur des tonalités des différents segments de fréquence,
la STA étant une STA à extrêmement haut débit, EHT, et la PPDU étant une PPDU EHT qui est soit une PPDU EHT à largeur de bande de 160 MHz, soit une PPDU EHT à largeur de bande de 320 MHz,
la MRU comprenant trois unités de ressources, RU, comprenant une RU à 242 tonalités, une RU à 484 tonalités et une RU à 996 tonalités ;
la RU à 242 tonalités et la RU à 484 tonalités étant transmises dans une première fréquence des segments de fréquence ; et
la RU à 996 tonalités étant transmise dans un deuxième des segments de fréquence ;
pour effectuer la segmentation par round robin proportionnelle sur chaque bloc de bits, la circuiterie de traitement devant configurer l'analyseur de segments pour :
utiliser un rapport proportionnel, mₗ, pour chacun des segments de fréquence de la MRU pour allouer les bits à chacun des segments de fréquence,
le rapport proportionnel mₗ étant un entier fois le nombre de bits, s, dans un groupe, et
le nombre de bits s dans un groupe étant basé sur un nombre de bits codés par sous-porteuse, Nbpscs, selon l'équation suivante : $s = max \left(1, \frac{Nbpscs , l , μ}{2}\right)$ où l est un indice du segment de fréquence et µ un indice de flux spatial.

2. Appareil selon la revendication 1, pour une PPDU EHT avec une MRU qui n'est pas supérieure à 80 MHz, la circuiterie de traitement (406) étant conçue pour coder la PPDU EHT pour transmission sans utilisation de l'analyseur de segments.

3. Appareil selon la revendication 1 ou la revendication 2, les tonalités de la MRU étant fournies dans des segments de fréquence de 80 MHz.

4. Appareil selon la revendication 3, la circuiterie de traitement étant destinée à configurer l'analyseur de segments pour allouer des bits, m, à chacun des segments de fréquence conformément à l'équation suivante : $\left(m=\left({\sum }_{l = 0}^{L - 1} {m}_{l}\right). \left[\frac{k}{{m}_{l}}\right]+{\sum }_{l = 0}^{L - 1} {m}_{i} + \left(k mod {m}_{l}\right)\right.$ où mₗ est le rapport proportionnel, k est un indice de bit dans un segment de fréquence, l est l'indice du segment de fréquence, et L est le nombre de segments de fréquence.

5. Appareil selon l'une quelconque des revendications 1 à 4, pour coder le champ de données de la PPDU EHT, la circuiterie de traitement étant destinée à configurer l'analyseur de segments pour générer la séquence de distribution de bits à partir de bits codés reçus en provenance d'un analyseur de flux en divisant les bits codés en blocs de bits codés sur la base d'un nombre de bits codés par flux spatial, N_{CBPSS}, et d'un nombre, L, de segments de fréquence de la MRU.

6. Appareil selon la revendication 1, la circuiterie de traitement (406) comprenant un processeur de bande de base configuré pour être couplé à deux antennes ou plus (401).

7. Appareil de la revendication 6, la mémoire (408) étant configurée pour stocker la PPDU EHT.

8. Support de stockage lisible par ordinateur qui stocke des instructions pour l'exécution par une circuiterie de traitement d'une station, STA, configurée pour fonctionner dans un réseau local sans fil, WLAN,
pour une unité de données de protocole de procédure de conformité de couche physique, PLCP, PPDU, avec une unité de ressources multiples, MRU, qui est supérieure à 80 MHz, les instructions, lorsqu'elles sont exécutées, amenant la circuiterie de traitement à :
configurer un analyseur de segments pour coder un champ de données de la PPDU, l'analyseur de segments générant une séquence de distribution de bits conformément à un processus de segmentation proportionnelle par round robin en affectant des groupes consécutifs de bits à différents segments de fréquence de la MRU de façon en round robin, chaque groupe ayant un nombre de bits s, le nombre de bits s étant basé sur une taille du segment de fréquence pour le groupe ; et
encoder la PPDU pour transmission, le champ de données étant transmis sur des tonalités des différents segments de fréquence,
la STA étant une STA EHT, et la PPDU étant une PPDU EHT qui est soit une PPDU EHT à largeur de bande de 160 MHz, soit une PPDU EHT à largeur de bande de 320 MHz,
la MRU comprenant trois unités de ressources, RU, comprenant une RU à 242 tonalités, une RU à 484 tonalités et une RU à 996 tonalités ;
la RU à 242 tonalités et la RU à 484 tonalités étant transmises dans une première fréquence des segments de fréquence ; et
la RU à 996 tonalités étant transmise dans un deuxième des segments de fréquence,
pour effectuer la segmentation par round robin proportionnelle sur chaque bloc de bits, les instructions amenant la circuiterie de traitement à configurer l'analyseur de segments pour :
utiliser un rapport proportionnel, mₗ, pour chacun des segments de fréquence de la MRU pour allouer les bits à chacun des segments de fréquence,
le rapport proportionnel mₗ étant un entier fois le nombre de bits, s, dans un groupe, et
le nombre de bits s dans un groupe étant basé sur un nombre de bits codés par sous-porteuse, Nbpscs, selon l'équation suivante : $s = max \left(1, \frac{Nbpscs , l , μ}{2}\right)$ où l est un indice du segment de fréquence et µ un indice de flux spatial.

9. Support de stockage lisible par ordinateur selon la revendication 8, pour une PPDU EHT avec une MRU qui n'est pas supérieure à 80 MHz, les instructions amenant la ciruiterie de traitement à coder la PPDU EHT pour transmission sans utilisation de l'analyseur de segments.

10. Support de stockage lisible par ordinateur selon la revendication 8 ou 9, les tonalités de la MRU étant fournies dans des segments de fréquence de 80 MHz.

11. Support de stockage lisible par ordinateur selon l'une quelconque des revendications 8 à 10, les instructions amenant la circuiterie de traitement à configurer l'analyseur de segments pour allouer des bits, m, à chacun des segments de fréquence conformément à l'équation suivante : $\left(m=\left({\sum }_{l = 0}^{L - 1} {m}_{l}\right). \left[\frac{k}{{m}_{l}}\right]+{\sum }_{l = 0}^{L - 1} {m}_{i} + \left(k mod {m}_{l}\right)\right.$ où mₗ est le rapport proportionnel, k est un indice de bit dans un segment de fréquence, l est l'indice du segment de fréquence, et L est le nombre de segments de fréquence.
